(19) Europäisches Patentamt
European Patent Office
Office européen des brevets

(11) **EP 2 613 178 A2**

(12) **EUROPÄISCHE PATENTANMELDUNG**

(43) Veröffentlichungstag:
**10.07.2013   Patentblatt 2013/28**

(51) Int Cl.:
***G01T 1/24*** *(2006.01)*

(21) Anmeldenummer: **12007915.7**

(22) Anmeldetag: **23.11.2012**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **25.11.2011   DE 102011119325**

(71) Anmelder: **Albert-Ludwigs-Universität Freiburg
79098 Freiburg (DE)**

(72) Erfinder:
• **Fauler, Alex
  D-79102 Freiburg (DE)**

• **Disch, Christian
  D-79350 Sexau (DE)**
• **Zwerger, Andreas
  D-79102 Freiburg (DE)**
• **Dambacher, Markus
  D-79106 Freiburg (DE)**
• **Fiederle, Michael
  D-79104 Freiburg (DE)**

(74) Vertreter: **Geitz Truckenmüller Lucht
Werthmannstrasse 15
79098 Freiburg (DE)**

(54) **Detektor und Verfahren zum Nachweis von ionisierender Strahlung**

(57)   Es werden ein Detektor und ein Verfahren zum Nachweis von ionisierender Strahlung vorgeschlagen. Der Detektor (1) weist ein Detektorvolumen (2) aus einem Halbleitermaterial, in welchem einfallende ionisierende Strahlung freie Elektron-Loch-Paare erzeugt, eine Kathodenseite (4) des Detektorvolumens (2), zu welcher in einem elektrischen Feld die erzeugten freien Löcher driften, eine Anodenseite (3) des Detektorvolumens (2), zu welcher in einem elektrischen Feld die erzeugten freien Elektronen driften, mindestens zwei Elektroden (5, 6) an der Anodenseite (3) und mindestens zwei Elektroden (7, 8) an der Kathodenseite (4) auf. Zwischen den Elektroden (5, 6, 7, 8) besteht eine Potentialdifferenz. Die Potentialdifferenz zwischen den Elektroden (7, 8) der Kathodenseite (4) untereinander ist dabei kleiner als die Potentialdifferenz zwischen jeder der Elektroden (5, 6) der Anodenseite (3) einerseits und jeder der Elektroden (7, 8) der Kathodenseite (4) andererseits. Durch Einstrahlen einer ionisierenden Strahlung auf das Detektorvolumen (2) werden Elektron-Loch-Paare in dem Detektorvolumen (2) erzeugt. An den Elektroden (7, 8) der Kathodenseite werden Signale erfasst. Aus diesen Signalen wird die Differenz gebildet und ausgewertet.

Fig. 1

EP 2 613 178 A2

**Beschreibung**

Die Erfindung geht aus von einem Detektor zum Nachweis von ionisierender Strahlung und von einem Verfahren zum Nachweis von ionisierender Strahlung.

Bekannte Detektoren zum Nachweis ionisierender Strahlung weisen ein Detektorvolumen aus einem Halbleitermaterial auf, in welchem eine einfallende ionisierende Strahlung Elektron-Loch-Paare erzeugt. Bei der ionisierenden Strahlung kann es sich beispielsweise um hochenergetische Gammastrahlung von einigen hundert keV handeln. Das Detektorvolumen ist an zwei entgegen gesetzten Seiten, die im Folgenden als Anodenseite und Kathodenseite bezeichnet werden, mit Elektroden ausgestattet. Die Elektroden auf der Anodenseite und der Kathodenseiten befinden sich auf einem unterschiedlichen elektrischen Potential. In dem elektrischen Feld im Detektorvolumen wandern die Elektronen der durch die ionisierende Strahlung gebildeten Elektron-Loch-Paare zu der Anodenseite und die Löcher zu der Kathodenseite. Die Anzahl der durch die ionisierende Strahlung erzeugten Elektron-Loch-Paare ist direkt proportional zu der Energie der ionisierenden Strahlung. Geeignete Detektoren besitzen beispielsweise ein Detektorvolumen von einigen 100 mm$^3$. Ein typisches Detektorvolumen ist beispielsweise ein Würfel mit einer Kantenlänge von circa 1 cm.

Um die Energie der ionisierenden Strahlung möglichst exakt bestimmen zu können, ist es angestrebt, alle Elektronen der durch die Strahlung gebildeten Elektron-Loch-Paare im Detektorvolumen nachzuweisen. Dies wird jedoch dadurch erschwert, dass sowohl Elektronen als auch Löcher an Haftstellen eingefangen werden können oder mit der jeweils anderen Ladungsträgersorte rekombinieren können. Dieser Effekt wird mit Hilfe der Lebensdauer der Ladungsträger beschrieben. Darüber hinaus können Ladungsträger an Defekten wie Einschlüssen, Zwillingen, Präzipitaten oder ähnlichen im Detektorvolumen eingefangen werden. Dieser Effekt ist nicht von der Zeit sondern von der durchlaufenden Wegestrecke in dem Detektorvolumen abhängig. Ferner kann Comptonstreuung auftreten, was ebenfalls einen Einfluss auf die nachgewiesenen Ladungsträger hat.

Die Elektroden der Anoden- und Kathodenseite sind über Schaltkreise mit einer oder mehreren Spannungsquellen verbunden, um eine Potentialdifferenz zwischen den Elektroden zu erzeugen und aufrecht zu erhalten. Werden durch die ionisierende Strahlung in dem Detektorvolumen Elektron-Loch-Paare erzeugt, und driften diese Elektronen und Löcher in dem Detektorvolumen zu den Elektroden, so wird Energie von dem angelegten elektrischen Feld abgegeben um die Ladungsträger zu bewegen. Um diese Energie in dem elektrischen Feld zu ersetzten und ein konstant anliegendes Spannungspotential an den Elektroden aufrechtzuerhalten, ist in dem Schaltkreis ein Kondensator vorgesehen, von dem Ladung zu den Elektroden an der Anodenseite und/ oder der Kathodenseite fließt. Dieser Kondensator ist Teil eines ladungsempfindlichen Vorverstärkers. Der Kondensator wird als Rückkoppelkondensator und seine Kapazität als Rückkoppelkapazität $C_{fb}$ bezeichnet. Die von dem Rückkoppelkondensator zu den Elektroden des Detektors fließende Ladung führt zu einer Änderung der Potentialdifferenz an dem Rückkoppelkondensator. Der zeitliche Verlauf der gegebenenfalls verstärkten Änderung der Potentialdifferenz an dem Rückkoppelkondensator bildet das Signal des Detektors. Im folgenden wird der zeitliche Verlauf der gegebenenfalls verstärkten Änderung der Potentialdifferenz an dem Rückkoppelkondensator als Signal bezeichnet. Der Prozess der Ladungsinfluenzierung auf den Elektroden erfolgt während der Bewegung der Elektronen und Löcher im Detektorvolumen und ist mit dem Ankommen der Ladungsträger an den Elektroden abgeschlossen. Die Änderung der Potentialdifferenz an dem Rückkoppelkondensator ist am Ende der Ladungsträgerdrift abgesehen von Verlusten direkt proportional zur Anzahl der durch die ionisierende Strahlung erzeugten Elektron-Loch-Paare.

Um das Problem der unvollständigen Ladungssammlung zu überwinden, sind verschiedene Ansätze bekannt. Bei der Methode der Charge Loss Correction wird bei einem Detektor mit einer flächigen Elektrode an der Anodenseite und einer flächigen Elektrode an der Kathodenseite ein Signal an der Anodenseite erfasst, bei dem außer der Pulshöhe auch die Anstiegsflanke ausgewertet wird. Hieraus wird die Tiefe der Wechselwirkung bestimmt und ein entsprechender Korrekturwert errechnet. Darüber hinaus ist es bekannt, durch optimierte Elektroden- und Detektorgeometrien den Einfluss der Driftbewegung der Ladungsträger auf die an der Anodenseite influenzierte Ladung zu reduzieren. Dies erfolgt beispielsweise dadurch, dass der größte Teil der Elektronen erst dann auf der Anode influenziert wird, wenn die Elektronen in die unmittelbare Umgebung der Anodenseite gelangen. Dies wird beispielsweise durch zwei an der Anodenseite koplanar angeordnete Elektroden erreicht, die abschnittsweise ineinander greifen. Eine derartige Elektrodenstruktur ist zum Beispiel aus der US 5,530,249 A bekannt. Sie wird als Coplanar Grid, abgekürzt CPG, oder als koplanares Gitter bezeichnet. Diese Bezeichnung ist angelehnt an ein Frisch Grid oder ein Frisch Gitter, welches bei Gas-Detektoren zum Einsatz kommt. Die Funktion der ein koplanares Gitter bildenden Elektroden der Anodenseite eines Halbleiter-Detektors ist vergleichbar mit einem Frisch Gitter bei Gasdetektoren. Bei einem koplanaren Gitter sind an der Kathodenseite eine flächige Elektrode und an der Anodenseite mindestens zwei Elektroden mit mehreren streifenförmigen Abschnitten angeordnet. Diese streifenförmigen Abschnitte greifen ineinander und erstrecken sich in einer alternierenden Elektrodenstruktur im wesentlichen über die gesamte Anodenseite. Die Struktur wird auch als Interdigitalstruktur bezeichnet. Die Elektrode an der Kathodenseite liegt auf einem großen negativen Potential gegenüber den Elektroden der Anodenseite. Die Potentialdifferenz zwischen den Elektroden auf der Anodenseite ist im Vergleich dazu wesentlich kleiner. Die Elektrode auf der Anodenseite mit der größeren Potentialdifferenz gegenüber der Elektrode auf der Kathodenseite wird als ladungssammelnde Elektrode oder als collecting Elektrode bezeichnet. Die Elektrode auf der Anodenseite mit der kleineren Potentialdifferenz gegenüber der Elektrode auf der Kathodenseite wird als nicht-ladungssammelnde Elektrode oder als non-collecting Elektrode bezeichnet. Aus den Signalen der ladungssammelnden Elektrode und der nicht-ladungssammelnden Elektrode der Anodenseite wird die Differenz gebildet. Diese Differenz stellt das eigentliche Messsignal dar. Der Vorteil derartiger Detektoren besteht darin, dass die Bewegung der Löcher über nahezu das ganze Detektorvolumen nicht zum Verlauf des eigentlichen Messsignals beiträgt. Die Differenz aus dem Signal der ladungssammelnden Elektrode und der nicht-ladungssammelnden Elektrode wird im allgemeinen als Information zu nur einer Ladungsträgersorte, nämlich zu den Elektronen, betrachtet. Die aus der Differenz der beiden Signale gewonnene Information betrifft nur einen relativ kleinen Bereich des Detektorvolumens nahe der Anodenseite. Nur in diesem Bereich unterscheiden sich die Signale der ladungssammelnden und der nicht-ladungssammelnden Elektrode. Die Tiefe dieses Bereichs ist ungefähr so groß wie die lateralen Abstände der einzelnen Abschnitte der beiden Elektroden auf der Anodenseite. Aufgrund dieses Zusammenhangs wird das mit derartigen Detektoren durchgeführte Verfahren auch als Nahbereichsmessung bezeichnet.

Die aus dem Stand der Technik bekannten Detektoren und Verfahren können zwar das Problem der unvollständigen Ladungssammlung reduzieren, jedoch nicht vollständig beheben. Es ist daher Aufgabe der vorliegenden Erfindung, einen Detektor sowie ein Verfahren zum Nachweis von ionisierender Strahlung zur Verfügung zu stellen, die die Ladungssammlung weiter verbessern, um die Anzahl der durch die ionisierende Strahlung erzeugten Ladungsträger der Elektron-Loch-Paare möglichst exakt zu bestimmen.

Diese Aufgabe wird durch einen Detektor mit den Merkmalen des Anspruchs 1 und durch ein Verfahren mit den Merkmalen des Anspruchs 9 gelöst. Der Detektor zeichnet sich dadurch aus, dass nicht nur auf der Anodenseite sondern auch auf der Kathodenseite mindestens zwei Elektroden angeordnet sind. Die Elektroden der Kathodenseite weisen mehrere bevorzugt lang gestreckte Abschnitte auf. Langgestreckt bedeutet, dass ihre Länge groß ist im Vergleich zu ihrer Breite und ihrer Dicke. Dabei werden die Länge und die Breite parallel zur Oberfläche der Kathodenseite gemessen und die Dicke senkrecht zur Oberfläche der Kathodenseite. Die Abschnitte der ersten und der zweiten Elektrode sind an der Oberfläche der Kathodenseite nebeneinander und mit Abstand zueinander angeordnet und wechseln sich ab. Nebeneinander bezieht sich dabei auf eine Richtung parallel zur Oberfläche der Kathodenseite. Jeweils ein Abschnitt der ersten Elektrode ist dabei benachbart zu mindestens einem Abschnitt der zweiten Elektrode angeordnet. Jeweils ein Abschnitt der zweiten Elektrode ist benachbart zu mindestens einen Abschnitt der ersten Elektrode angeordnet. Die Abschnitte bilden entlang der Oberfläche der Kathodenseite eine alternierende Elektrodenstruktur, die auch als Interdigitalstruktur bezeichnet wird. Dabei erstrecken sie sich im Wesentlichen über die gesamte Karthodenseite. Die Potentialdifferenz zwischen den Elektroden auf der Kathodenseite ist dabei klein gegenüber der Potentialdifferenz zwischen jeder der Elektroden der Anodenseite einerseits und jeder der Elektroden der Kathodenseite andererseits. Dies führt dazu, dass ein durch die ionisierende Strahlung in dem Detektorvolumen gebildetes Loch eines Elektron-Loch-Paares in einigem Abstand zur Kathodenseite denselben Einfluss spürt wie bei einer durchgehenden flächigen Elektrode auf der Kathodenseite. Erst wenn das Loch durch das elektrische Feld in die Nähe der Kathodenseite wandert, spürt es einen Unterschied zwischen der ersten Elektrode mit der größeren Potentialdifferenz zur Anodenseite und der zweiten Elektrode mit der kleineren Potentialdifferenz zur Anodenseite. Unter diesen Einfluss bewegt sich das Loch zu der ersten Elektrode mit dem größeren Potentialunterschied. Diese erste Elektrode wird als ladungssammelnde Elektrode der Kathodenseite bezeichnet. Die zweite Elektrode mit dem kleineren Potentialunterschied zur Anodenseite wird als nicht-ladungssammelnde Elektrode der Kathodenseite bezeichnet.

Gemäß dem erfindungsgemäßen Verfahren mit den Merkmalen des Anspruchs 9 wird sowohl das Signal der ersten Elektrode der Kathodenseite als auch das Signal der zweiten Elektrode der Kathodenseite erfasst. Diese Signale entsprechen dabei jeweils wie eingangs erläutert dem zeitlichen Verlauf der Änderung der Potentialdifferenz der Rückkoppelkapazität des zugehörigen ladungsempfindlichen Vorverstärkers des Detektors. Zu jeder Elektrode der Kathodenseite ist ein separater ladungsempfindlicher Vorverstärker vorgesehen. Aus beiden Signalen wird die Differenz gebildet. Die Signale der ersten und zweiten Elektrode unterscheiden sich nur für den Bereich nahe der Kathodenseite. Durch die Bildung der Differenz der beiden Signale erhält man insbesondere eine Information über diesen Nahbereich.

Da die Löcher in dem Halbleitermaterial des Detektorvolumens eine geringere Beweglichkeit aufweisen als die Elektronen, sind die Laufzeiten der Löcher von dem Ort der Elektron-Loch-Paarbildung im Detektorvolumen bis zur Kathodenseite länger als die Laufzeiten der Elektronen vom Ort der Elektron-Loch-Paarbildung bis zur Anodenseite. Hiervon ausgenommen sind selbstverständlich Elektron-Loch-Paare, die in unmittelbarer Nähe zur Kathodenseite gebildet werden. Aus der Differenz des Signals der ersten Elektrode der Kathodenseite und dem Signal der zweiten Elektrode der Kathodenseite kann somit die Laufzeit der Löcher bestimmt werden. Diese Laufzeit entspricht der Zeit, die ein Loch benötigt, um von der Position der durch die einfallende ionisierende Strahlung bewirkten Elektron-Loch-Paarbildung bis zu der Kathodenseite zu gelangen. Die Startzeit kann dabei aus dem Signal einer beliebigen einzelnen Elektrode des Detektors ermittelt werden. Eine Uhr kann gestartet werden, sobald das Signal einer der Elektroden eine vorgegebene Schwelle übersteigt. Aufgrund der größeren Beweglichkeit der Elektronen kann es beispielsweise aus einem Signal der Elektroden der Anodenseite gewonnen werden. Dabei wird davon ausgegangen, dass die Laufzeit der Elektronen vernachlässigbar klein ist gegenüber der Laufzeit der Löcher. Darüber hinaus ist die Ankunft der Elektronen der gebildeten Elektron-Loch-Paare an der Anodenseite auch in dem Signal der Elektroden auf der Kathodenseite erkennbar.

Da die Laufzeit der Löcher von ihrem Entstehungsort bis zum Erreichen der Kathodenseite aufgrund ihrer geringeren Beweglichkeit wesentlich größer ist als die Laufzeit der Elektronen von ihrem Entstehungsort bis zum Erreichen der Anodenseite, kann die Laufzeit der Löcher aus dem Signal der Elektroden auf der Kathodenseite wesentlich genauer bestimmt werden als die Laufzeit der Elektronen aus dem Signal der Elektroden auf der Anodenseite. Dabei ist es unerheblich, wie groß die Verluste der bei der Elektron-Loch-Paarbildung freigesetzten Löcher bis zum Erreichen der Kathodenseite ist. Ein qualitativer Anstieg im Differenzsignal der Elektroden auf der Kathodenseite reicht aus, um die Laufzeit der Löcher zu bestimmen.

Tritt bei der in das Detektorvolumen einfallenden ionisierenden Strahlung Comptonstreuung auf, so werden an verschiedenen Positionen innerhalb des Detektorvolumens Elektron-Loch-Paare gebildet. Diese Positionen werden mit i nummeriert, wobei i von 1 bis n läuft und n die Anzahl aller Positionen angibt, an denen Elektron-Loch-Paare erzeugt werden. Die an einer i-ten Position gebildeten Elektron-Loch-Paare werden im Folgenden als i-te Elektron-Loch-Paar-Wolke bezeichnet. Diejenigen Löcher, die am nächsten an der Kathode entstanden sind, erreichen als erste die Kathodenseite. In Abhängigkeit von ihrem Entstehungsort im Detektorvolumen erreichen die Löcher der verschiedenen Elektron-Loch-Paarwolken zu unterschiedlichen Zeiten die Kathodenseite. Dies ist sowohl in den Signalen der beiden Elektroden auf der Kathodenseite erkennbar als auch in der aus den Signalen gebildeten Differenz.

Aus der Laufzeit der Löcher zwischen dem Ort der Elektron-Loch-Paarbildung und der Kathodenseite kann die Position der Elektron-Loch-Paarbildung bezüglich des Abstandes dieser Position zur Kathodenseite bestimmt werden. Da der Abstand zwischen der Kathodenseite und der Anodenseite des Detektors bekannt ist, ergibt sich daraus wiederum der Abstand dieser Position zur Anodenseite. Diese Information kann verwendet werden, um das Signal der Elektroden an der Anodenseite zu korrigieren.

Die aus den Signalen der beiden Elektroden der Kathodenseite gewonnenen Ergebnisse können verwendet werden, um das Signal der Elektroden der Anodenseite zu korrigieren und die unvollständige Ladungssammlung weitgehend zu kompensieren.

Nach einer vorteilhaften Ausgestaltung der Erfindung sind die Elektroden an der Kathodenseite koplanar angeordnet. Sie befinden sich damit in der gleichen Ebene. Darüber hinaus kann auch eine der beiden Elektroden auf einer zusätzlichen Schicht angeordnet sein.

Nach einer weiteren vorteilhaften Ausgestaltung der Erfindung sind zumindest einige der Abschnitte der ersten Elektrode der Kathodenseite als Streifen ausgebildet. Ferner sind zumindest einige der Abschnitte der zweiten Elektrode der Kathodenseite als Streifen ausgebildet. Die Streifen können einen geradlinigen oder gekrümmten Verlauf aufweisen. Dabei wechseln sich die streifenförmigen Abschnitte der ersten und zweiten Elektrode ab, so dass ein erster Abschnitt zwischen zwei zweiten Abschnitten und ein zweiter Abschnitt zwischen zwei ersten Abschnitten angeordnet ist. Ausgenommen hiervon sind die Abschnitte am Rand der Kathodenseite.

Nach einer weiteren vorteilhaften Ausgestaltung der Erfindung weisen die Streifen einen geradlinigen Verlauf auf und sind parallel zueinander.

Nach einer weiteren vorteilhaften Ausgestaltung der Erfindung weisen die Streifen einen gekrümmten Verlauf um ein gemeinsames Zentrum auf. Sie können beispielsweise Teile von Kreisen bilden, die um einen gemeinsamen Kreismittelpunkt angeordnet sind.

Nach einer weiteren vorteilhaften Ausgestaltung der Erfindung bilden die Elektroden an der Anodenseite ein zweidimensionales Pixel-Array. Diese Elektrodenstruktur liefert eine ortsaufgelöste Information über den Entstehungsort der Elektron-Loch-Paare in dem Detektorvolumen.

Nach einer weiteren vorteilhaften Ausgestaltung der Erfindung bilden die Elektroden der Anodenseite ein koplanares Gitter. Hierzu weisen beispielsweise eine erste Elektrode und eine zweite Elektrode an der Anodenseite mehrere Abschnitte auf, welche kammartig ineinander greifen.

Nach einer weiteren vorteilhaften Ausgestaltung des erfindungsgemäßen Verfahrens wird bei einem erfindungsgemäßen Detektor mit einer ladungssammelnden und einer nicht-ladungssammelnden Elektrode an der Anodenseite, welche ein koplanares Gitter ausbilden, die Gesamtladung $Q_{e,m}^{total}$ der an der Anodenseite ankommenden Elektronen der durch die einfallende Strahlung gebildeten Elektron-Loch-Paare aus der Differenz des Signals der ladungssammelnden Elektrode und der nicht-ladungssammelnden Elektrode bestimmt. Ferner werden die Ladung $Q_{h,m}^{i}$ der Löcher der i-ten Elektron-Loch-Paar-Wolke und die Laufzeit $t_h^{i}$ der Löcher der i-ten Elektron-Loch-Paar-Wolke aus der Differenz der Signale der ersten und zweiten Elektrode der Kathodenseite bestimmt. Die Gesamtladung $Q_{e,d}^{total}$ aller Elektronen der durch die einfallende Strahlung gebildeten Elektron-Loch-Paare wird aus dem Produkt aus $Q_{e,m}^{total}$ und dem Faktor k berechnet. Dabei hängt k von der Summe aller $Q_{h,m}^{i}$, den Laufzeiten $t_h^{i}$ der Löcher, den Beweglichkeiten der Elektronen und Löcher in dem Detektorvolumen, der Potentialdifferenz zwischen den Elektroden und dem Abstand zwischen den Andenseite und der Kathodenseite ab.

Nach einer weiteren vorteilhaften Ausgestaltung des erfindungsgemäßen Verfahrens wird k berechnet mit

$$1/k = \sum Q_{h,d}^i / Q_{h,d}^{total} * g_e(t_e^i)$$

wobei $Q_{h,d}^i$ die Ladung aller Löcher der durch die Strahlung gebildeten i-ten Elektron-Loch-Paar-Wolke, $Q_{h,d}^{total}$ die Gesamtladung aller Löcher der durch die einfallende Strahlung gebildeten Elektron-Loch-Paare und $t_e^i$ die Laufzeit der Elektronen der i-ten Elektron-Loch-Paar-Wolke ist. $g_e(t_e^i)$ wird durch Kalibrationsmessungen an dem Detektor bestimmt bzw. kann in erster Näherung als $g_e(t_e^i) = \exp(-t_e^i/\tau_e)$ angenommen werden, wobei $\tau_e$ die experimentell zu bestimmende Elektronenlebensdauer darstellt. Es gilt:

$$Q_{e,d}^i = f_e\left(t_e^i\right)\cdot Q_{e,m}^i =: \frac{1}{g_e\left(t_e^i\right)}\cdot Q_{e,m}^i$$

$$Q_{h,d}^i = f_h\left(t_h^i\right)\cdot Q_{h,m}^i$$

Hierbei stehen die Fußnoten e für Elektronen, h für Löcher, d für deponiert und m für gemessen. $Q_{e,d}^i$ ist die Ladung der Elektronen der i-ten Elektron-Loch-Paar-Wolke, welche durch die in dem Detektorvolumen deponierte Energie der ionisierenden Strahlung erzeugt wird. $Q_{e,m}^i$ ist die Ladung der Elektronen der i-ten Elektron-Loch-Paar-Wolke, welche an der Anodenseite nachgewiesen wird. $f_e(t_e^i)$ ist eine Funktion, welche die unvollständige Ladungssammlung der Elektronen in Abhängigkeit von der Laufzeit der Elektronen der i-ten Elektron-Loch-Paar-Wolke beschreibt. $Q_{h,d}^i$ ist die Ladung der Löcher der i-ten Elektron-Loch-Paar-Wolke, welche durch die in dem Detektorvolumen deponierte Energie der ionisierenden Strahlung erzeugt wird. $Q_{h,m}^i$ ist die Ladung der Löcher der i-ten Elektron-Loch-Paar-Wolke, welche an der Kathodenseite nachgewiesen wird. $f_h(t_h^i)$ ist eine Funktion, welche die unvollständige Ladungssammlung der Löcher in Abhängigkeit von der Laufzeit der Löcher der i-ten Elektron-Loch-Paar-Wolke beschreibt. $f_e(t_e^i)$ und $f_h(t_h^i)$ können durch Kalibrationsmessungen an dem Detektor bestimmt werden.

Die Laufzeiten der Elektronen der einzelnen Elektron-Loch-Paar-Wolken können aus den Laufzeiten der Löcher bestimmt werden gemäß:

$$t_e^i = \left(t_h^{max} - t_h^i\right)\cdot \frac{\mu_h}{\mu_e}$$

Wobei $t_h^{max}$ die maximale Laufzeit der Löcher bei gegebener Detektorgeometrie und Biasspannung ist. Sie entspricht der Laufzeit eines Lochs von der Anodenseite zu der Kathodenseite. $\mu_e$ ist die Beweglichkeit der Elektronen im Detektorvolumen. Sie kann durch Kalibrationsmessungen an dem Detektor bestimmt werden. $\mu_h$ ist die Beweglichkeit der Löcher im Detektorvolumen. Sie kann durch Kalibrationsmessungen an dem Detektor bestimmt werden.

Dann gilt:

$$Q_{e,m}^{total} = \sum_i Q_{e,m}^i = \sum_i g_e\left(t_e^i\right)\cdot Q_{e,d}^i =$$

$$= Q_{e,d}^{total} \cdot \sum_i \frac{Q_{e,d}^i}{Q_{e,d}^{total}} \cdot g_e\left(t_e^i\right) =$$

$$= Q_{e,d}^{total} \cdot \sum_i \frac{Q_{h,d}^i}{Q_{h,d}^{total}} \cdot g_e\left(t_e^i\right) \quad \Rightarrow$$

$$\Rightarrow Q_{e,d}^{total} = k \cdot Q_{e,m}^{total} \qquad mit \quad \frac{1}{k} = \sum_i \frac{Q_{h,d}^i}{Q_{h,d}^{total}} \cdot g_e\left(t_e^i\right)$$

Dem liegt zugrunde, dass

$$\frac{Q^i_{e,d}}{Q^{total}_{e,d}} = \frac{Q^i_{h,d}}{Q^{total}_{h,d}} \quad \forall i$$

da die Aufteilung der Energiedepositionen bei jeglicher Wechselwirkung für Elektronen und Löcher aufgrund ihrer paarweisen Erzeugung immer gleich ist.

Mit dem Wert $k$ kann der auf der Anodenseite gemessene Wert der Ladung für Elektronen korrigiert werden. $k$ selbst enthält nur direkt messbare Größen und phänomenologisch oder aus den oben genannten Theorien bestimmbare Funktionen $f$ und $g$. Die zeitliche Abhängigkeit der Funktionen $f$ und $g$ kann dabei auch durch andere Zeiten als $t_e$ und $t_h$ ausgedrückt werden, beispielsweise durch die Differenz $\Delta t_h = t_h - t_e$, oder phänomenologisch bestimmt werden. Die Abhängigkeit t' muss dabei so gewählt werden, dass ein bijektiver Zusammenhang zwischen t' und der Wechselwirkungstiefe, das heißt den tatsächlichen Laufzeiten oder Driftzeiten $t_e$ und $t_h$, besteht.

Nach einer weiteren vorteilhaften Ausgestaltung der Erfindung werden folgende Verfahrensschritte zum Nachweis der ionisierenden Strahlung durchgeführt:

1. Eine Uhr wird gestartet anhand des Signals einer der Elektroden des Detektors oder aus der Summe oder Differenz aus den Signalen zweier Elektroden beim Überschreiten einer Schwelle. Vorzugsweise wird die Uhr anhand der Summe der Signale der ladungssammelnden Elektrode und der nicht-ladungssammelnden Elektrode der Anodenseite gestartet, da dieses Signal am steilsten ansteigt. Die nachfolgenden Schritte werden bis zum Erreichen der Zeit $t^{max}_h$ durchgeführt. Dies entspricht der Zeit, die ein Loch benötigt um von der Anodenseite zur Kathodenseite zu wandern. Bis zu diesem Zeitpunkt ist ein Zurücksetzen der Uhr auf Null, auch genannt weiterer Timerstart, verboten.

2. Bestimmung von $Q^{total}_{e,m}$ aus dem subtrahierten Signal aus der ladungssammelnden Elektrode und der nicht-ladungssammelnden Elektrode der Anodenseite. Dies erfolgt entsprechend der aus der US 5,530,249 A bekannten Coplanar Grid Elektronik.

3. Bestimmung der Pulshöhen $Q^i_{h,m}$ und der Laufzeiten $t^i_h$ der Löcher der i-ten Elektron-Loch-Paar-Wolken vom Start der Uhr an:

   a. Bei jedem Auftreffen der Löcher an der Kathodenseite kann sofort mittels einer für den Detektor bekannten Tabelle die deponierte Energie $Q^i_{h,d}$ errechnet werden: $Q^i_{h,d} = c^i \cdot Q^i_{h,m}$. Für die in der Tabelle hinterlegten Korrekturfaktoren gilt: $c^i = f_h\left(t^i_h\right)$ wobei $t^i_h$ die Adresse innerhalb der Tabelle festlegt.

   b. Aktualisierung bzw. Speicherung der Summe $Q^{total}_{h,d} = \sum_i Q^i_{h,d}$ nach jedem Teilereignis.

   c. Berechnung der Laufzeiten der Elektronen aus den Laufzeiten der Löcher $t^i_e = \left(t^{max}_h - t^i_h\right) \cdot \frac{\mu_h}{\mu_e}$ wobei der Quotient $\frac{\mu_h}{\mu_e}$ auch eine phänomenologisch ermittelte Zahl sein kann.

   d. Berechnung der Größe $Q^i_{h,d} \cdot g_e\left(t^i_e\right)$ und Aktualisierung der Summe $S = \sum_i Q^i_{h,d} \cdot g_e\left(t^i_e\right)$

4. Beim Erreichen der Zeit $t^{max}_h$ wird die Größe k errechnet:

$$\frac{1}{k} = \frac{S}{Q_{h,d}^{total}} = \sum_i \frac{Q_{h,d}^j}{Q_{h,d}^{total}} \cdot g_e\left(t_e^i\right)$$

5. Korrektur des Elektronensignals $Q_{e,d}^{total}$ gemäß $Q_{e,d}^{total} = k \cdot Q_{e,m}^{total}$

6. Ausgabe dieser Zahl. Löschung aller Speicher und Zurücksetzen der Uhr auf Null. Anschließend wird die Uhr erneut gestartet.

Nach einer weiteren vorteilhaften Ausgestaltung der Erfindung wird von der Näherung

$$Q_{h,d}^{total} \approx Q_{e,m}^{total}$$

ausgegangen. Da die Verluste bei den Löchern wesentlich größer sind als bei den Elektronen, wird $Q_{e,m}^{total}$ als eine gute Abschätzung für $Q_{h,d}^{total}$ angesehen. Der Vorteil in dieser Näherung liegt darin, dass selbst bei geringen Lebensdauern der Löcher ein Schätzwert gegeben ist, obwohl gegebenenfalls keine Löcher an der Kathodenseite nachgewiesen werden können. Dies gilt insbesondere für Löcher, die nahe der Anodenseite entstanden sind. Ein weiterer Vorteil liegt in der Möglichkeit, die Messung nach dem Start der Uhr und vor Ablauf der Zeit $t_h^{max}$ abzubrechen und sich mit der teilweisen Korrektur zu begnügen. Diese Vorgehensweise kann im Falle hoher Ereignisraten vorteilhaft sein.

Im Folgenden bezeichnen $Q_{e/h,m/d}^{i,rest}$ die Größen: $Q_{e/h,m/d}^{total} - \sum_{j=1}^{i} Q_{e/h,m/d}^j$

Dann gilt:

$$Q_{e,m}^{total} = \left(Q_{e,d}^{total} - Q_{e,d}^{i,rest}\right) \cdot \sum_{j=1}^{i} \frac{Q_{h,d}^j}{Q_{h,d}^{total}} \cdot g_e\left(t_e^j\right) + Q_{e,m}^{i,rest}$$

Mit

$$Q_{e,d}^{total} - Q_{e,d}^{i,total} = Q_{h,d}^{total} - Q_{h,d}^{i,rest}$$

folgt:

$$Q_{e,m}^{total} = \left(Q_{h,d}^{total} - Q_{h,d}^{i,rest}\right) \cdot \left(\sum_{j=1}^{i} \frac{Q_{h,d}^j}{Q_{e,m}^{total}} \cdot g_e\left(t_e^j\right) - 1\right) + Q_{e,d}^{total}$$

Daraus folgt:

$$Q_{e,d}^{total} = Q_{e,m}^{total} + \left(\sum_{j=1}^{i} Q_{h,d}^j\right) \cdot \left(1 - \sum_{j=1}^{i} \frac{Q_{h,d}^j}{Q_{e,m}^{total}} \cdot g_e\left(t_e^j\right)\right)$$

$$Q_{e,d}^{total} = Q_{e,m}^{total} + \left( \sum_{j=1}^{i} Q_{h,m}^{j} \cdot f_h(t_h^j) \right) \cdot \left( 1 - \sum_{j=1}^{i} \frac{Q_{h,m}^{j} \cdot f_h(t_h^j)}{Q_{e,m}^{total}} \cdot g_e(t_e^j) \right)$$

Nach einer weiteren vorteilhaften Ausgestaltung der Erfindung wird von der folgenden Näherung ausgegangen:

$$Q_{e,m}^{i,rest} \approx Q_{e,d}^{i,rest}$$

Im Folgenden bezeichnen $Q_{e/h,m/d}^{i,rest}$ wie oben angegeben die Größen $Q_{e/h,m/d}^{total} - \sum_{j=1}^{i} Q_{e/h,m/d}^{j}$. Dies bedeutet, dass bei nicht vollständiger Erfassung aller Ladungsträger der in dem Detektorvolumen durch die ionisierende Strahlung erzeugten i-ten Elektron-Loch-Paar-Wolke der Rest der gemessenen Ladung auf der Kathodenseite eine gute Abschätzung für die deponierte Restladung ist. Dieser Rest wird sich im Folgenden als der nicht korrigierbare Anteil erweisen.

Für $Q_{e,m}^{i,rest}$ gilt:

$$Q_{e,m}^{i,rest} = Q_{e,m}^{total} - \sum_{j=1}^{i} Q_{e,m}^{j} = Q_{e,m}^{total} - \sum_{j=1}^{i} Q_{e,d}^{j} \cdot g_e(t_e^j)$$

$$Q_{e,d}^{i,rest} = Q_{e,m}^{total} - \sum_{j=1}^{i} Q_{e,d}^{j} \cdot g_e(t_e^j) \quad \Big| + \sum_{j=1}^{i} Q_{e,d}^{j}$$

$$Q_{e,d}^{i,rest} + \sum_{j=1}^{i} Q_{e,d}^{j} = Q_{e,m}^{total} + \sum_{j=1}^{i} Q_{e,d}^{j} \left( 1 - g_e(t_e^j) \right) =$$

$$= Q_{e,m}^{total} + \sum_{j=1}^{i} Q_{h,m}^{j} \cdot f_h(t_h^i) \cdot \left( 1 - g_e(t_e^j) \right)$$

Mit $Q_{e,d}^{i,rest} + \sum_{j=1}^{i} Q_{e,d}^{j} = Q_{e,d}^{total}$ folgt:

$$Q_{e,d}^{total} = Q_{e,m}^{total} + \sum_{j=1}^{i} Q_{h,m}^{j} \cdot f_h(t_h^j) \left( 1 - g_e(t_e^j) \right)$$

Wobei für $t_e^j$ wie oben gilt:

$$t_e^j = \left(t_h^{\max} - t_h^j\right)\cdot\frac{\mu_h}{\mu_e}$$

Mit der Definition:

$$h\left(t_h^j\right) := f_h\left(t_h^j\right)\cdot\left(1 - g_e\left(t_e^j\right)\right)$$

gilt:

$$Q_{e,d}^{total} = Q_{e,m}^{total} + \sum_{j=1}^{i} Q_{h,m}^j \cdot h\left(t_h^j\right)$$

Die oben genannte Näherung bietet die Möglichkeit, mit der "Relative Gain"-Methode kombiniert zu werden. Hierzu müssen die Funktionen *f* und *g* an die Methode angepasst werden. Damit können Elektron-Loch-Paar-Wolken, die nahe der Anodenseite entstanden sind, korrigiert werden, obwohl eventuell gar keine Löcher an der Kathodenseite nachgewiesen werden können. Darüber hinaus kann im Falle von hohen Ereignisraten eine kürzere Messzeit benutzt werden und die Korrektur damit nur für Teilereignisse, die weit von den Anoden entstanden sind korrigiert werden. Zu diesen Elektron-Loch-Paaren ist die Laufzeit der Löcher relativ kurz.

Weitere Vorteile und vorteilhafte Ausgestaltungen der Erfindung sind der nachfolgenden Beschreibung, der Zeichnung und den Ansprüchen entnehmbar.

Zeichnung

In der Zeichnung sind für einen erfindungsgemäßen Detektor die Signale der Elektroden der Anodenseite und der Kathodenseite dargestellt. Es zeigen:

Figur 1    perspektivische Darstellung eines Detektors,

Figur 2    Aufsicht auf die Anodenseite des Detektors gemäß Figur 1,

Figur 3    Aufsicht auf die Kathodenseite des Detektors gemäß Figur 1,

Figur 4    Schaltbild eines Detektors gemäß Figur 1 mit Hochspannungsversorgung und einem ladungsempfindlichen Vorverstärker,

Figur 5    Darstellung der Signale der Elektroden der Anodenseite und deren Differenz bei einem beispielhaften Ereignis aus zwei Comptonstreuungen und anschließender Photoabsorption,

Figur 6    Darstellung der Signale der Elektroden der Kathodenseite und deren Differenz für dasselbe Ereignis wie in Fig 4 aus zwei Comptonstreuungen und anschließender Photoabsorption.

Beschreibung des Ausführungsbeispiels

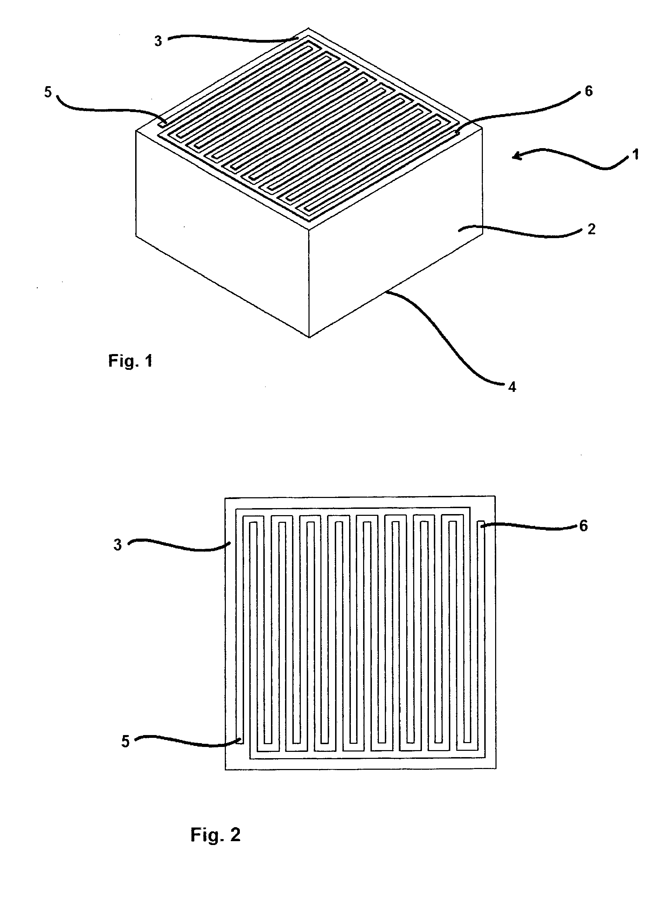

In den Figuren 1 bis 3 ist ein quaderförmiger Detektor 1 mit einem Detektorvolumen 2 aus einem Halbleitermaterial dargestellt. Eine der Seiten des Detektors 1 ist als Anodenseite 3 ausgebildet. Die der Anodenseite abgewandte Seite ist als Kathodenseite 4 ausgebildet. Sowohl die Anodenseite 3 als auch die Kathodenseite 4 ist mit jeweils zwei Elektroden ausgestattet. Die beiden Elektroden 5 und 6 der Anodenseite 3 weisen eine kammartige Struktur mit mehreren parallelen länglichen Abschnitten auf. Die Abschnitte sind als Streifen ausgebildet. Dabei greifen die länglichen Abschnitte der beiden Elektroden 5 und 6 derart ineinander ein, dass sich die länglichen Abschnitte der ersten Elektrode 5 mit den länglichen Abschnitten der zweiten Elektrode 6 abwechseln. Die beiden Elektroden 5 und 6 berühren sich nicht. Der Abstand zwischen den einzelnen Abschnitten der ersten Elektrode 5 und der zweiten Elektrode 6 ist im wesentlichen überall gleich.

Die beiden Elektroden 7 und 8 der Kathodenseite sind im wesentlichen gleich ausgebildet wie die beiden Elektroden 5 und 6 der Anodenseite.

Die beiden koplanar an der Anodenseite 3 angeordneten Elektroden 5, 6, bilden ein koplanares Gitter für Elektronen. Die beiden koplanar an der Kathodenseite 4 angeordneten Elektroden 7, 8 bilden ein koplanares Gitter für Löcher.

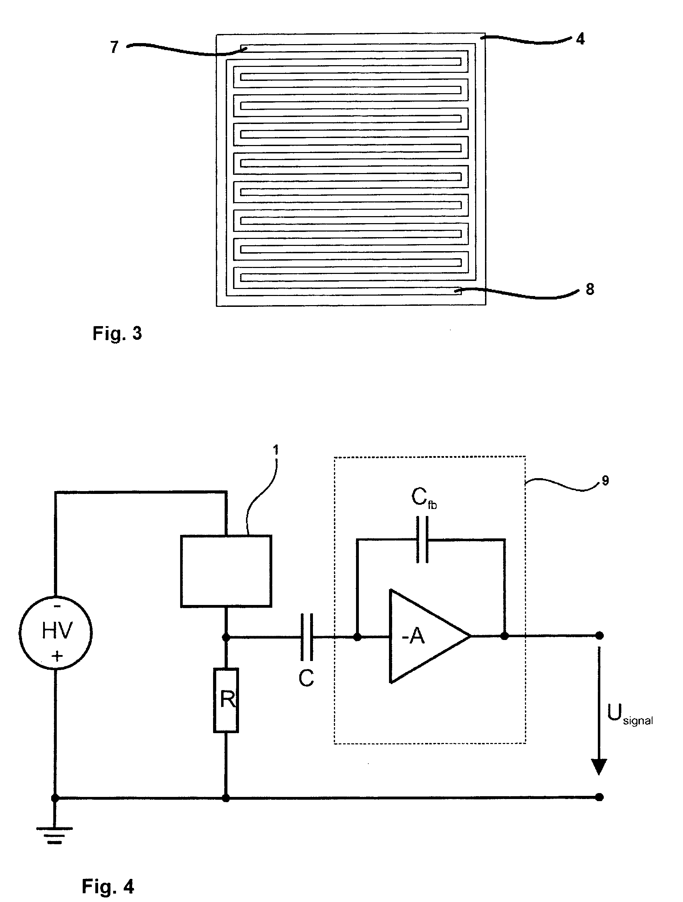

In Figur 4 ist ein Prinzip für ein Schaltbild eines Detektor 1 gemäß Figur 1 dargestellt. Der Schaltkreis weist neben dem Detektor 1 eine Hochspannungsquelle HV, einen ladungsempfindlichen Vorverstärker 9, einen Vorspannungswiderstand R und eine Kapazität C zur Wechselspannungskopplung auf. Der ladungsempfindliche Vorverstärker 9 ist mit einem invertierenden Verstärker mit Verstärkung -A und mit einer Rückkoppelkapazität $C_{fb}$ ausgestattet. Um eine konstante Potentialdifferenz zwischen den Elektroden des Detektors bei driftenden Elektronen und Löchern in dem Detektorvolumen aufrecht zu erhalten, fließt Ladung von der Rückkoppelkapazität $C_{fb}$ zu den Elektroden des Detektors. Dies führt zu einer Änderung der Potentialdifferenz des Rückkoppelkondensators mit der Rückkoppelkapazität $C_{fb}$. Diese Änderung der Potentialdifferenz wird verstärkt und als Signal $U_{signal}$ nachgewiesen. Das Schaltbild zeigt das Prinzip eines Schaltkreises des Detektors für eine Elektrode an der Anodenseite und eine Elektrode an der Kathodenseite. Da bei dem Detektor gemäß Figur 1 sowohl die Anodenseite als auch die Kathodenseite mit jeweils zwei Elektroden ausgestattet ist, sind zur Erfassung der Signale der insgesamt vier Elektroden Schaltkreise mit vier ladungsempfindlichen Vorverstärkern vorgesehen. Von diesen vier Vorverstärkern ist in der Zeichnung nur einer dargestellt. Darüber hinaus ist eine in der Zeichnung nicht dargestellte Subtrahiereinrichtung vorgesehen, die die Differenz der Signale der beiden Elektroden der Kathodenseite und die Differenz der beiden Elektroden der Anodenseite bildet.

Die Elektroden 5, 6 der Anodenseite 3 und die Elektroden 7, 8 der Kathodenseite 4 weisen jeweils ein vorgegebenes Potential auf, wobei die Potentiale unterschiedlich sind. Über die Schaltkreise und die Spannungsquelle wird zwischen den Elektroden 5, 6, 7, 8 eine Potentialdifferenz erzeugt. Dabei ist die Potentialdifferenz zwischen den beiden Elektroden 5 und 6 der Anodenseite 3 klein gegenüber der Potentialdifferenz zwischen jeder der beiden Elektroden 5, 6 der Anodenseite einerseits und jeder der beiden Elektroden der 7, 8 der Kathodenseite 4 andererseits. Darüber hinaus ist die Potentialdifferenz zwischen den beiden Elektroden 7, 8 der Kathodenseite 4 klein gegenüber der Potentialdifferenz zwischen jeder der beiden Elektroden 7, 8 der Kathodenseite 4 einerseits und jeder der beiden Elektroden 5, 6 der Anodenseite andererseits.

Durch einfallende ionisierende Strahlung, beispielsweise Gammastrahlung, werden in dem Detektorvolumen 2 Elektronen-Loch-Paare erzeugt. Diese bewegen sich in dem durch die Potentialdifferenz zwischen den Elektroden erzeugten elektrischen Feld. Dabei wandern die Elektronen zu der Anodenseite 3 und die Löcher zu der Kathodenseite 4.

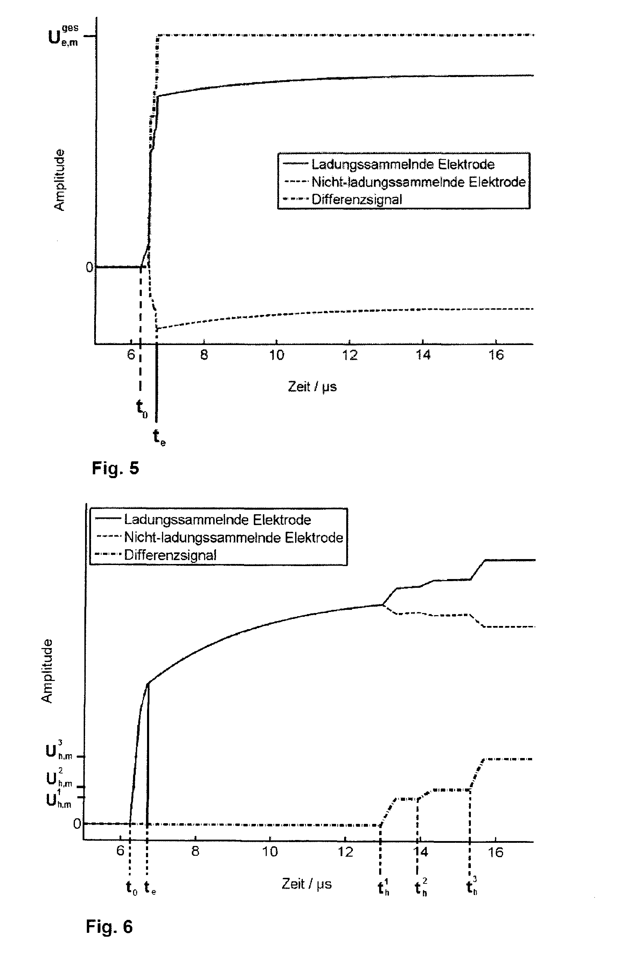

Figuren 5 und 6 zeigen die Signale der Elektroden 5, 6, 7, 8 des Detektors 1. Der zeitliche Verlauf der Änderung der Potentialdifferenz der Rückkoppelkapazität $C_{fb}$ entspricht dem Signal. Alle Elektroden befinden sich auf einem unterschiedlichen Potential. Dabei wird die Elektrode der Anodenseite mit der größeren Potentialdifferenz gegenüber den Elektroden der Kathodenseite als ladungssammelnde Elektrode oder als collecting Elektrode der Anodenseite bezeichnet. Die Elektrode der Anodenseite mit der kleineren Potentialdifferenz gegenüber der Kathodenseite wird als nicht-ladungssammelnde Elektrode oder als non-collecting Elektrode der Anodenseite bezeichnet. Die Elektrode der Kathodenseite mit der größeren Potentialdifferenz gegenüber den Elektroden der Anodenseite wird als ladungssammelnde Elektrode oder als collecting Elektrode der Kathodenseite bezeichnet. Die Elektrode der Kathodenseite mit der kleineren Potentialdifferenz gegenüber der Anodenseite wird als nicht-ladungssammelnde Elektrode oder als non-collecting Elektrode der Kathodenseite bezeichnet.

Das Detektorvolumen wird einer ionisierenden Strahlung ausgesetzt, die in dem Detektorvolumen Elektron-Loch-Paare erzeugt. In dem elektrischen Feld des Detektorvolumens wandern die Elektronen zu der Anodenseite und die Löcher zu der Kathodenseite. Es findet Comptonstreuung statt, so dass die Elektronen und die Löcher der verschiedenen Ereignisse zu unterschiedlichen Zeiten an den Elektroden der Anodenseite und der Kathodenseite ankommen.

In Figur 5 sind die Signale der ladungssammelnden und der nicht-ladungssammelnden Elektrode der Anodenseite sowie deren Differenz dargestellt. Das Signal beider Elektroden steigt bei Entstehung der Elektron-Loch-Paare zunächst leicht und dann steil an. Die Stufen in dem steilen Anstieg weisen auf Comptonstreuung hin. Haben zum Zeitpunkt $t_e$ alle gebildeten Elektronen die Anodenseite erreicht, zeigt das Signal der Elektronen nur noch einen sehr geringen Anstieg. Dieser schwache Anstieg wird durch die zur Kathodenseite driftenden Löcher der Elektronen-Loch-Paare verursacht. Durch die Bildung der Differenz der beiden Signale werden die schwachen Anstiege eliminiert und der steile Anstieg verstärkt. Das Differenzsignal ist bis auf den steilen Anstieg konstant. Aus dem Differenzsignal können $Q_{e,m}^{total}$ und $t_0$ bestimmt werden. Da die Ladung proportional zu der Spannung ist, ergibt sich aus $U_{e,m}^{total}$ unmittelbar $Q_{e,m}^{total}$.

In Figur 6 ist der zeitliche Verlauf der Signale der ladungssammelnden und der nicht-ladungssammelnden Elektroden der Kathodenseite sowie deren Differenz dargestellt. Die Signale beider Elektroden zeigen im Bereich zwischen 6 $\mu$s und 7 $\mu$s einen steilen Anstieg. Die Ursache hierfür sind die Elektronen der durch die ionisierende Strahlung gebildeten Elektron-Loch-Paare. Das Driften der Elektronen zu den Elektroden der Anodenseite ist auch im Signal der Elektroden der Kathodenseite erkennbar. Daher kann auch aus den Signalen der Figur 6 $t_0$ bestimmt werden. Auch der Zeitpunkt $t_e$ ist in Figur 6 erkennbar. Bei ca. 13 $\mu$s findet ein erster steiler Anstieg des Signals der ladungssammelnden Elektrode statt. Die Ursache hierfür besteht darin, dass die ersten Löcher der erzeugten Elektron-Loch-Paare die Kathodenseite erreichen. Diese stammen von einem ersten Ereignis der Comptonstreuung, bei dem Elektron-Loch-Paare besonders nahe der Kathodenseite gebildet wurden. In der Differenz aus den beiden Signalen der ladungssammelnden und der nicht-ladungssammelnden Elektrode ist der Anstieg noch deutlicher zu erkennen. Aus diesem ersten Anstieg kann die Zeit $t_h^1$ bestimmt werden. Bei ca. 14 $\mu$s findet ein zweiter Signalanstieg im Signal der ladungssammelnden Elektrode und im Differenzsignal statt. Die Ursache hierfür ist ein zweites Ereignis einer Comptonstreuung. Hieraus kann $t_h^2$ bestimmt werden. Bei ca. 15,5 $\mu$s ist ein dritter Signalanstieg erkennbar. Er deutet auf ein drittes Ereignis hin. Hieraus kann $t_h^3$ bestimmt werden. Aus den Werten der Differenz der Signale der ladungssammelnden und der nicht-ladungssammelnden Elektrode im Bereich der drei Signalanstiege können

$U_{h,m}^1$, $U_{h,m}^2$ Und $U_{h,m}^3$

und aufgrund der Proportionalität zwischen U und Q

$Q_{h,m}^1$, $Q_{h,m}^2$ Und $Q_{h,m}^3$

bestimmt werden.

Aus den mittels der Signale gemäß Figur 5 und 6 bestimmten Werten kann mittels der oben beschriebenen Näherungen und der durch Kalibrationsmessungen bestimmten Werte $Q_{e,d}^{total}$ berechnet werden.

Sämtliche Merkmale der Erfindung können sowohl einzeln als auch in beliebiger Kombination miteinander erfindungswesentlich sein.

Bezugszahlen

1 Detektor

2 Detektorvolumen

3 Anodenseite

4 Kathodenseite

5 Elektrode der Anodenseite

6 Elektrode der Anodenseite

7 Elektrode der Kathodenseite

8 Elektrode der Kathodenseite

9 ladungsempfindlicher Vorverstärker

**Patentansprüche**

1. Detektor zum Nachweis von ionisierender Strahlung mit einem Detektorvolumen (2) aus einem Halbleitermaterial, in welchem einfallende ionisierende Strahlung freie Elektron-Loch-Paare erzeugt mit einer Kathodenseite (4) des Detektorvolumens (2), zu welcher in einem elektrischen Feld die erzeugten freien Löcher driften,
mit einer Anodenseite (3) des Detektorvolumens (2), zu welcher in einem elektrischen Feld die erzeugten freien Elektronen driften,
mit mindestens zwei Elektroden (5, 6) an der Anodenseite (3),
mit mindestens zwei Elektroden (7, 8) an der Kathodenseite (4),
mit mehreren Abschnitten einer ersten Elektrode (7) der Kathodenseite (4) und mehreren Abschnitten einer zweiten Elektrode (8) der Kathodenseite (4), wobei die Abschnitte der ersten und der zweiten Elektrode (7, 8) nebeneinander an der Kathodenseite (4) angeordnet sind und sich in einer alternierenden Struktur im wesentlichen über die gesamte Kathodenseite (4) erstrecken,
mit einer Potentialdifferenz zwischen den Elektroden (7, 8) der Kathodenseite (4) und mit einer Potentialdifferenz zwischen jeder der Elektroden (7, 8) der Kathodenseite (4) einerseits und jeder der Elektroden (5, 6) der Anodenseite (3) andererseits, wobei die Potentialdifferenz zwischen den Elektroden (7, 8) der Kathodenseite (4) kleiner ist als die Potentialdifferenz zwischen jeder der Elektroden (5, 6) der Anodenseite (3) einerseits und jeder der Elektroden (7, 8) der Kathodenseite (4) andererseits.

2. Detektor nach Anspruch 1, **dadurch gekennzeichnet, dass** die Elektroden (7, 8) an der Kathodenseite (4) koplanar angeordnet sind.

3. Detektor nach Anspruch 1 oder 2, **dadurch gekennzeichnet, dass** die Abschnitte der ersten und der zweiten Elektrode (7, 8) der Kathodenseite (4) ineinander greifen und jeweils ein Abschnitt der ersten Elektrode (7) benachbart zu mindestens einem Abschnitt der zweiten Elektrode (8) ist und umgekehrt.

4. Detektor nach einem der vorhergehenden Ansprüche, **dadurch gekennzeichnet, dass** zumindest einige der Abschnitte der ersten Elektrode (7) der Kathodenseite (4) als Streifen ausgebildet sind, und dass zumindest einige der Abschnitte der zweiten Elektrode (8) der Kathodenseite (4) als Streifen ausgebildet sind.

5. Detektor nach Anspruch 4, **dadurch gekennzeichnet, dass** die Streifen einen geradlinigen Verlauf aufweisen und parallel zueinander sind.

6. Detektor nach Anspruch 4, **dadurch gekennzeichnet, dass** die Streifen einen gekrümmten Verlauf um ein gemeinsames Zentrum aufweisen.

7. Detektor nach einem der vorhergehenden Ansprüche, **dadurch gekennzeichnet, dass** die Elektroden (5, 6) der Anodenseite (3) ein koplanares Gitter bilden.

8. Detektor nach einem der vorhergehenden Ansprüche, **dadurch gekennzeichnet, dass** die Elektroden (5, 6) an der Anodenseite (3) ein zweidimensionales Pixel-Array bilden.

9. Verfahren zum Nachweis ionisierender Strahlung mit einem Detektor nach einem der vorhergehenden Ansprüche **gekennzeichnet durch** folgende Verfahrensschritte:

Anlegen einer Spannung an die Elektroden (5, 6) der Anodenseite (3) und der Kathodenseite (4), wobei die Potentialdifferenz zwischen den Elektroden (5, 6) der Anodenseite (3) einerseits und den Elektroden (7, 8) der Kathodenseite (4) andererseits größer ist als die Potentialdifferenz zwischen den Elektroden (7, 8) der Kathodenseite (4) untereinander,
Erzeugen von Elektron-Loch-Paaren in dem Detektor (1) **durch** Einstrahlen einer ionisierenden Strahlung auf das Detektorvolumen (2),
Erfassen eines ersten Signals einer ersten Elektrode (7) der Kathodenseite (4),
Erfassen eines zweiten Signals einer zweiten Elektrode (8) der Kathodenseite (4),
Bilden der Differenz aus dem ersten und dem zweiten Signal,
Bestimmen der Laufzeiten der Löcher zwischen der Position der Entstehung der Elektron-Loch-Paare und den Elektroden (7, 8) der Kathodenseite (4) aus der Differenz.

10. Verfahren nach Anspruch 9, **dadurch gekennzeichnet, dass** aus den Laufzeiten der Löcher der Abstand zwischen der Position der Entstehung der zugehörigen Elektronen-Loch-Paare in dem Detektorvolumen (2) und der Anodenseite (3) oder der Kathodenseite (4) bestimmt wird.

11. Verfahren nach Anspruch 9 oder 10, **dadurch gekennzeichnet, dass** ein Signal einer oder mehrerer Elektroden (5, 6) der Anodenseite (3) erfasst wird, und dass das Signal mittels der Laufzeiten der Löcher und/ oder die Position der Entstehung der Elektronen-Loch-Paare korrigiert wird.

12. Verfahren nach Anspruch 11, **dadurch gekennzeichnet, dass** der Detektor (1) mit einer ladungssammelnden und einer nicht-ladungssammelnden Elektrode (5, 6) an der Anodenseite (3) ausgestattet ist, welche ein koplanares Gitter ausbilden, dass die Gesamtladung $Q_{e,m}^{total}$ der an der Anodenseite (3) ankommenden Elektronen der durch die einfallende Strahlung gebildeten Elektron-Loch-Paare aus der Differenz des Signals der ladungssammelnden Elektrode (5) und der nicht-ladungssammelnden Elektrode (6) bestimmt wird, dass die Ladung $Q_{h,m}^{i}$ der Löcher der i-ten Elektron-Loch-Paar-Wolke und die Laufzeit $t_h^i$ der Löcher der i-ten Elektron-Loch-Paar-Wolke aus der Differenz des ersten und zweiten Signals der Elektroden (7, 8) der Kathodenseite (4) bestimmt wird, und dass die Gesamtladung $Q_{e,d}^{total}$ aller Elektronen der durch die einfallende Strahlung gebildeten Elektron-Loch-Paare aus dem Produkt aus $Q_{e,m}^{total}$ und dem Faktor k berechnet wird, wobei k von der Summe aller $Q_{h,m}^{i}$, den Laufzeiten $t_h^i$ der Löcher, den Beweglichkeiten der Elektronen und Löcher in dem Detektorvolumen, der Potentialdifferenz zwischen den Elektroden (5, 6, 7, 8) und dem Abstand zwischen den Andenseite (3) und der Kathodenseite (4) abhängt.

13. Verfahren nach Anspruch 12, **dadurch gekennzeichnet, dass** k berechnet wird mit

$$1/k = \Sigma\ Q_{h,d}^{i}\ /\ Q_{h,d}^{total} * g_e(t_e^i)$$

wobei $Q_{h,d}^{i}$ die Ladung aller Löcher der durch die Strahlung gebildeten i-ten Elektron-Loch-Paar-Wolke, $Q_{h,d}^{total}$ die Gesamtladung aller Löcher der durch die einfallende Strahlung gebildeten Elektron-Loch-Paare und $t_e^i$ die Laufzeit der Elektronen der i-ten Elektron-Loch-Paar-Wolke ist, und dass $g_e(t_e^i)$ durch Kalibrationsmessungen an dem Detektor bestimmt wird.

14. Verfahren nach Anspruch 12, **dadurch gekennzeichnet, dass** k berechnet wird mit

$$1/k = \Sigma\ Q_{h,d}^{i}\ /\ Q_{h,d}^{total} * g_e(t_e^i)$$

wobei $Q_{h,d}^{i}$ die Ladung aller Löcher der durch die Strahlung gebildeten i-ten Elektron-Loch-Paar-Wolke, $Q_{h,d}^{total}$ die Gesamtladung aller Löcher der durch die einfallende Strahlung gebildeten Elektron-Loch-Paare und $t_e^i$ die Laufzeit der Elektronen der i-ten Elektron-Loch-Paar-Wolke ist, und dass $g_e(t_e^i)$ in erster Näherung als $g_e(t_e^i) = \exp(-t_e^i/\tau_e)$ gegeben ist, wobei $\tau_e$ die Lebensdauer der Elektronen ist.

15. Verfahren nach Anspruch 14, **dadurch gekennzeichnet, dass** die Lebensdauer $\tau_e$ der Elektronen experimentell bestimmt wird.

16. Verfahren nach einem der Ansprüche 12 bis 15, **dadurch gekennzeichnet, dass** von der Näherung $Q_{h,d}^{total} \approx Q_{e,m}^{total}$ ausgegangen wird.

**Fig. 1**

**Fig. 2**

**Fig. 3**

**Fig. 4**

**Fig. 5**

Legend:
- Ladungssammelnde Elektrode
- Nicht-ladungssammelnde Elektrode
- Differenzsignal

$U^{ges}_{e,m}$ · Amplitude · Zeit / µs · $t_0$ · $t_e$

**Fig. 6**

Legend:
- Ladungssammelnde Elektrode
- Nicht-ladungssammelnde Elektrode
- Differenzsignal

Amplitude · $U^3_{h,m}$ · $U^2_{h,m}$ · $U^1_{h,m}$ · Zeit / µs · $t_0$ · $t_e$ · $t^1_h$ · $t^2_h$ · $t^3_h$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5530249 A